# EUROPEAN PATENT APPLICATION

(11) **EP 1 421 859 A1**
(43) Date of publication of application: **26.05.2004**
(21) Application number: 02767871.3
(22) Date of filing: 29.08.2002
(51) Int. Cl.: A23L 2/00, A23L 2/02, A23L 2/38, A23F 3/40, A23F 5/46, A23C 9/156, C12C 3/00

(54) **DRINK CONTAINING FLOWER OR HERB FLAVOR OR FLOWER OR HERB FLAVOR EXTRACT**

(30) Priority: 30.08.2001 JP 2001261565; 26.07.2002 JP 2002218453
(71) Applicant: Shin Mitsui Sugar Co., Ltd., Chuo-ku, Tokyo 103-8423 (JP)
(72) Inventor: SHIMIZU, Takeo, Machida-shi, Tokyo 194-0032 (JP); NAGAI, Yukie, Chigasaki-shi, Kanagawa 253-0084 (JP); KASHIMURA, Jun, Ota-ku, Tokyo 144-0054 (JP); MIZUTANI, Takeo, Yokohama-shi, Kanagawa 221-0863 (JP)
(74) Representative: Bawden, Peter Charles
(86) International application number: PCT/JP2002/008745
(87) International publication number: WO 2003/017788

(57) **Abstract**

A drink containing a flower or herb flavor or a flower or herb extract, wherein total sweetness of the drink in a drinking form is equivalent to sweetness of more than 2.0 % and at most 4.5 % or at least 0.3 % and at most 2.0 % of sucrose, and the drink contains palatinose at a sweetness contribution ratio of 30 to 100 % or 20 to 100 %, respectively, based on the total sweetness. These drinks give a refreshing taste, a flinty taste and good balance of tastes.

## Description

### Technical Field

The present invention relates to a drink containing a flower or herb flavor or a flower or herb extract.

### Background Art

Conventionally, soft drinks generally have a degree of sweetness which corresponds to 6 to 10 % of sucrose. However, since around the summer of 1998, new drinks with lower sweetness which are called "near-water" or "flavored water" have been marketed and have created a new trend in the development of products in the field of soft drinks. These new drinks with lower sweetness contain less sugar and less fruit juice with these total contents of less than 10 %. A type of drinks called "near-water" is designed assuming that it will be taken in a large quantity at one time. Therefore, "near-water" is required to have a refreshing taste and a flinty taste. These characteristics of the "near-water", refreshing taste and flinty taste, must be retained even when the "near-water" is consumed in a large quantity at one time. Furthermore, the "near-water" must not have any effect, such as diarrhea, on the health of those who drank it, even when it is taken in a large quantity at one time.

Currently there is no off icial definition for "near-water" . However, "near-water" generally means to a soft drink which is slightly sweetened with fruit juice, and looks like regular water at a glance, and contains only about 5 % of sugar which is about one half of the sugar content in other soft drinks ("Basic Knowledge of Modern Vocabularies", 2001 internet version, Jiyu Kokumin-Sha Publishing Co., Ltd.). There are "near-water" products with a reduced sugar content and a reduced energy content on account of the use of an intensive sweetener, and products which do not have much sweetness due to the balance between acidic taste and sweetness, but which actually contain a sugar content of 8 % or more and a similar amount of energy as in regular soft drinks (National Consumer Affairs Center of Japan "Product Test Results on 500ml PET Bottled Soft Drinks" April 6, 2000).

The flavors or extracts which are used in "near-water" are usually a fruit flavor or mint type. In particular, citrus flavors are mainly used as a fruit flavor. However, under the influence of the booming herb and aromatherapy, use of flower or herb flavors, or flower or herb extracts other than fruit or mint flavors have been considered in the field of "near-water" . These are called "functional near-water" (Food Style 21, Vol. 3, No. 2, 37-40, 1992).

For example, low-sweet soft drinks and tea-based flavored teas or herb teas which contain functional components such as vitamins, minerals, dietary fibers or polyphenols are known as low-sweet drinks containing a flower or herb flavor, or a flower or herb extract.

Drinks containing a flower or herb flavor or extract to which sugar is added are known, but do not give a refreshing taste or a flinty taste due to the thick sweetness specific to sugar. Drinks containing a flower or herb flavor or extract to which an intensive sweetener is added are also known, but those are not tasty and do not give good balance of tastes due to the undesirable taste specific to the intensive sweeteners. For this reason, few drinks containing a flower or herb flavor or a flower or herb extract have been commercialized.

Sweeteners which are used in regular drinks having a level of sweetness corresponding to 6 to 10 % of sucrose include sucrose, palatinose, corn syrup, intensive sweeteners, sugar alcohols, and oligosaccharides. Sucrose, corn syrup, intensive sweeteners and sugar alcohols are known to be used as a sweetener in "near water".

Palatinose is known to present sweetness which is close to that of sucrose without peculiar taste. Specifically, it does not have any bitterness, astringency or metallic taste, beside sweetness, and it has neither unusual taste nor aftertaste. An aqueous solution with a sweetness level corresponding to 6 to 10 % of sucrose, which is usual in drinks, gives satisfactory sweetness without any peculiar taste. However, drinks contain major ingredients which create the taste of the drinks such as fruit juice, black tea, coffee or milk, and other minor ingredients such as flavors or extracts. When palatinose is added to such drinks, palatinose exhibits its sweetness well in some cases and not well in other cases; and palatinose does alter the taste of the other ingredients in some cases and does not in other cases. It is known that palatinose has good compatibility in taste with fruit juices and enhances the flavor of fruit juices.

Palatinose is known as a sweetener which does not cause dental caries. Further palatinose has the same level of energy as sucrose, and does not cause diarrhea. Therefore, palatinose has been used as a sweetener in foods and beverages for children.

In regular beverages, the degree of sweetness is adjusted to sweetness corresponding to 6 to 10 % of sucrose. When palatinose is used, more than a half of the total sweetness is supplemented by an intensive sweetener or an other sugar such as sugar alcohols or oligosaccharides as the sweetness of palatinose is about 42 % of that of sucrose. For example, the sweetness is adjusted by an intensive sweetener such as aspartame or stevia along with palatinose.

In addition, palatinose is used as a bulking agent for intensive sweeteners such as aspartame and stevia.

Furthermore, use of palatinose in combination with the intensive sweetener mentioned above is known to present sweetness which is closer to that of sucrose (Japanese Patent Application Laid-open No. S58-138355). In addition, concomitant use of palatinose and an intensive sweetener is known to reduce unusual taste and undesirable aftertaste of the intensive sweeteners (Japanese Patent Application Laid-open Nos. S58-31961 and S58-138355).

Recently, consumers prefer reduced sweetness in a trend of avoiding sweetness, or consumers request a refreshing sweet taste, a flinty sweetness, a sweet taste with pleasant aftertaste, or a sharp end of aftertaste instead of the rich sweetness of sucrose. Then, for the purpose of reducing the sweetness of conventional sweeteners, a part of sucrose in a sweetener is replaced with palatinose, taking advantage of the properties of lower sweetness of palatinose. That is, use of palatinose as a sweetener reduces the sweetness while maintaining the weight of the sweetener added to foods. However, when a part of sucrose is replaced with the same weight of palatinose in a usual drink having a sweetness level corresponding to 6 to 10 % of sucrose to produce a drink with reduced sweet taste, such a problem arises that the thickness of sweetness does not so much lower as the degree of sweetness lowers. In addition, the total content of sucrose and palatinose affects the heaviness of the taste. This is because the solid content (concentration) in a beverage is felt as weight which is a factor of taste. The weight is felt as texture and is a factor which influences the taste similarly as flavor does in foods.

In beverages which contain fruit juice having an acidic taste and which have a degree of sweetness corresponding to 6 to 10 % of sucrose, the use of palatinose as a primary sweetener enhances the flavor of the fruit juice (Japanese Patent Application Laid-open Nos. S 57-146557 and S 59-82073). The effect of palatinose in enhancing the flavor of fruit juice is not concerned with the degree of sweetness of foods. However, if palatinose is used at a sweetness corresponding to 5 to 10 % of sucrose as usual in coffee or tea, the aroma of coffee or tea is partially altered, so that it has been thought to be difficult to use palatinose in coffee or tea drinks.

Low sweetness bottled flavored water with palatinose is also known (Japanese Patent Application Laid-open No. H7-31433). That patent specification discloses bottled flavored water which is characterized in that a specific fruit flavor orperilla flavor, and sucrose or palatinose are added in specific amounts and the pH is adjusted by citric acid. However, there is no description on other flavors than the fruit flavor and perilla flavor.

Recently, as a new effect of taking palatinose, it is known that an increase in a blood sugar level after taking palatinose is not so sharp as that after taking sucrose and that this effect lasts longer than sucrose and, therefore, the use of palatinose in sports foods and drinks has been studied (Japanese Patent Application Laid-open No.H01-60360 and 2000-300212). However, flower or herb flavors or flower or herb extracts are not used there.

As mentioned above, it is known that when palatinose is used in foods and beverages, its sweet taste and other properties vary with foods and beverages. However, it is not known to use palatinose as a primary sweetener in low sweetness beverages and what properties are attained. Further, it is not known to use palatinose as a primary sweetener in low sweetness beverages with a flower or herb flavor or a flower or herb extract and what properties are attained.

### Disclosure of the Invention

The present invention provides a drink containing a flower orherb flavor or a flower or herb extract, wherein total sweetness of the drink in a drinking form is equivalent to sweetness of more than 2.0 % and at most 4.5 % or at least 0.3 % and at most 2.0 % of sucrose, and the drink contains palatinose at a sweetness contribution ratio of 30 to 100 % or 20 to 100 %, respectively, based on the total sweetness. These drinks give a refreshing taste and a flinty taste, the whole taste is well balanced, and the characteristics of the tastes do not change even when the drink is taken in a large quantity at one time.

### Best Mode for Carrying out the Invention

Palatinose, which is also called isomaltulose, is a disaccharide in which glucose is bound to fructose via α-1, 6-glucosyl bond. The physical properties of palatinose monohydrate crystals are as follows: melting point, 123 - 124 °C; specific rotatory power, [α]²⁰_{D} = +97.2; Fehling's solution reducing power, 52 % of glucose; solubility (calculated as anhydride), 29 % at 20 °C, and 67 % at 80 °C; quality of sweet taste of its aqueous solution, good; and the degree of sweetness, about 42 % of sucrose.

Palatinose is found in honey and cane juice in nature. It is also present in rearrangement reaction products which are formed when α-glucosyltransferase originating from bacteria or yeast acts on sucrose.

Commercially, sucrose is subjected to the action of α-glucosyltransferase which is produced by bacteria such as *Protaminobacter rubrum* or *Serratia plymuthica,* and most of the sucrose is converted into palatinose.

The terms "flower flavor" in the present specification refer to a flavor having a flavor specific to a flower. The terms "flower extract" refer to an extract having a flavor specific to a flower. The "flower extract" includes tea which is an extract in water or warm water from a flower as a starting material. Specifically, the "flower" includes rose, jasmine, lavender, hibiscus, orange flowers, chamomile, lilac, orchid, mauve, elder flower, St . John's Wort, eyebright, passion flower, heather, marigold. pot, and rosemary. However, the flower is not limited to these examples and can be selected broadly from the flowers which are used in drinks. The flower flavor or flower extract can be selected from any combination of two or more kinds of flower flavors or flower extracts.

The flower is preferably selected from rose, jasmine, lavender, hibiscus, orange flower, chamomile, lilac, andorchid.

The terms "herb flavor" in the present specification refer to a flavor having an aroma specific to herb, and the terms "herb extract" refer to an extract having an aroma specific to herb. The "herb extract" include herb tea, which is an extract in water or warm water from an herb as a raw material. Specific examples of the herb are peppermint, spearmint, lemon grass, rose hips, orange peel, cinnamon, ginger, saffron, echinacea, pomegranate, sage, eyebright, sweet fennel, thyme, mate, eucalyptus, raspberry leaf, rooibos, rosemary, plantain, oregano, cardamon, clove, star anise, linden, and anise seed. However, the herb is not limited to these examples and can be selected broadly from the herbs which are used in drink. The herb flavor or herb extract can be selected from any combination of two or more kinds of herb flavors or herb extracts.

The herb is preferably selected frompeppermint, spearmint, lemon grass, rose hips, orange, cinnamon, ginger, and saffron.

The term "flavor" in the present specification refers to a flavor for foods and drinks, and includes not only natural flavors obtained from flowers and herbs, but also synthetic flavors, and combination of flavors thereof. The term "extract" in the present specification refers to an extract obtained by extracting leaves, stems, seeds or fruits of flowers or herbs with water, alcohols or other solvents or a mixture thereof.

The statement "the total sweetness of the drink in a drinking form is equivalent to sweetness of more than 2.0 % and at most 4.5 % of sucrose" in one of the present inventions means that the total sweetness corresponds to more than 2.0 % and at most 4.5 % of sucrose based on the weight of the drink, if needed, after diluting or dissolving the present drink into a drinkable form.

The statement "the drink contains palatinose at a sweetness contribution ratio of 30 to 100 % based on the total sweetness" in one of the present inventions means that sweetness by palatinose contributes by 30 to 100 % to the total sweetness.

The "drink" in the present invention includes "near-water", isotonic drinks, sports drinks for supplying energy, tea-based drinks, fruit juice-containing soft drinks, alcoholic drinks, coffee drinks, milk drinks, soy milk drinks, and carbonated drinks, but not limited to these examples. Preferably, the drink is a tea-based drink.

The kinds of the tea drink are not particularly limited. It is a drink containing an extract from tea leaves, including plain tea, milk tea, lemon tea, flavored tea and fruits tea.

Embodiments of the "drink" in the present invention include drinks which can be drunk as such, powdered drinks, and concentrated drinks. Those which can be drunk as such include drinks which are packed in any size of cans, PET bottles, retort pouches, and paper packs. The powered drinks are drinks which. are to be drunk after dissolved to a concentration giving a degree of sweetness corresponding to more than 2.0 % and at most 4.5 % or at least 0.3 % and at most 2.0 % of sucrose. The concentrated drinks are drinks which are to be drunk after diluted it to a concentration giving a degree of sweetness corresponding to more than 2.0 % and at most 4.5 % or at least 0.3 % and at most 2.0 % of sucrose.

The embodiment of the "drinks" in the present invention include cold drinks and hot drinks.

A method of manufacturing the "drinks" of the present invention may be any method which is commonly used by persons skilled in the art and is not particularly limited.

The drinks of the present invention may contain sucrose, intensive sweeteners, sugar alcohols, corn syrup, and oligosaccharides as an additional sweetener. Preferably, sucrose or intensive sweeteners are used to supplement the remaining contribution ratio to the sweetness.

In the drinks of the present invention, the effects of the present invention can be achieved even if sucrose, intensive sweeteners, fructose, sugar alcohols, corn syrup, or oligosaccharides are used together.

As the intensive sweeteners, aspartame, stevia, sucralose, acesulfame potassium, alitame, and glycyrrhizin can be used. The sugar alcohols include erythritol, xylitol, and maltitol. The oligosaccharides include fructooligosaccharide and galactooligosaccharide. The corn syrup include fructose/glucose liquid sugar, glucose/fructose liquid sugar, and high fructose corn syrup. Since the sugar alcohols and the oligosaccharides may cause diarrhea when taken in a large quantity, the sweetener to be added as a supplementary sweetener should not cause diarrhea or should be added in an amount which does not cause diarrhea even when the drink of the present invention is taken in a large quantity.

The drink of the present invention is characterized by a refreshing taste, a flinty taste and good balance of tastes, compared to a drink with the same degree of sweetness with no palatinose.

It is unclear why the drink of the present invention containing palatinose demonstrates a refreshing feeling, a flinty taste and good balance of tastes. However, it is surmised that the characteristic of refreshing taste and flinty taste of palatinose and its ability to mask undesired tastes of other components (masking effect) show themselves in the low-sweet drinks. Therefore, the effects of the present invention will not appear in palatinose-containing drinks of a high degree of sweetness.

When palatinose was used as a sweetener in the past, palatinose was used along with an intensive sweetener in order to make the degree of the overall sweetness closer to that of sucrose andto achieve thickness of taste close to that of sucrose. Thus, in conventional drinks, theproperties of palatinose itself are hidden as much as possible by the concomitant use of palatinose and an intensive sweetener. In contrast, the drink of the present invention is characterized in that the characteristic tastes of palatinose are induced actively.

According to the present invention, the flavor or extract demonstrate satisfactory compatibility with palatinose when the total sweetness in a drinking form is more than 2.0 % and at most 4.5 % or at least 0.3 % and at most 2.0 % of sucrose and palatinose is contained at a sweetness contribution ratio of 30 to 100 % or 20 to 100 % based on the total sweetness, respectively.

It is known that when sucrose is used as a sweetener in drinks containing a flower or herb flavor or a flower or herb extract, the flavor of the latter enhances the sweetness. If sucrose is added at the regular degree of sweetness corresponding to 6 to 10 % of sucrose in a conventional drink containing a flower or herb flavor or a flower or herb extract, the drink tastes cloying due to the thick sweet taste. On the other hand, the flavor or extract demonstrates satisfactory compatibility with palatinose in the drink of the present invention.

In particular, in tea-based drinks of the present invention, the flavor or extract demonstrates better compatibility with palatinose (see the descriptions in the following Examples 3 and 8).

It is known that when palatinose is added to coffee or tea in such an amount as to give a degree of sweetness corresponding to 5 to 10 % of sucrose as in regular drinks, the taste of coffee or tea diminishes to destroy the original characteristic taste of coffee or tea. Conversely, in the drinks of the present invention, palatinose goes well with the taste and aroma of tea and also presents good compatibility with the flavor or extract of the present invention.

The effects of the present invention are not expected from the characteristic point of palatinose that its effects on the quality of taste of foods vary with target foods and from the conventional usages of palatinose.

As mentioned above, the drinks of the present invention have formulations which have not been reported in the past, and present a refreshing and a flinty taste, compared to one with sucrose alone at the same degree of sweetness, and show good compatibility between palatinose and the flavor or extract of the present invention.

According to the present invention, palatinose has a tendency of giving a refreshing taste and a flinty taste to a drink even when the total sweetness in the drink is low and the sweetness contribution ratio of palatinose is lower (see the descriptions in the following Examples 2 and 14).

It is found that the inclusion of palatinose at a sweetness contribution ratio of 30 to 100 % based on the total sweetness in a drink gives a refreshing taste and a flinty taste in the cases where the degree of sweetness corresponds to 4 .5 % of sucrose in the following Examples 2, 3, 7, 10, 12, 14 and 17 or in the cases where the degree of sweetness corresponds to 3.0 % of sucrose in the following Examples 2,4,6, 11, 14 and 16. Preferably, palatinose is added at a sweetness contribution ratio of 40 to 100 % based on the total sweetness.

As seen from the descriptions in the following Examples 2, 4, 6, 7, and 10, the effect of palatinose of giving a refreshing taste and a flinty taste is scarcely felt or sometimes felt only a little in the cases where the total sweetness is more than 2. 0 % and at most 4.5 % of sucrose and the sweetness contribution ratio of palatinose is less than 30 % based on the total sweetness. As seen from the description in the following Examples 10 through 13, when the sweetness contribution ratio of palatinose is less than 30 % based on the total sweetness, the effect of palatinose of giving a refreshing taste and a flinty taste varies with the kind of another sweetener used together. For this reason, it is desirable that palatinose is contained at a sweetness contribution ratio of 30 % or greater.

It is seen that the inclusion of palatinose at a sweetness contribution ratio of 20 to 100 % based on the total sweetness gives a refreshing taste and a flinty taste to drinks in the cases where the sweetness corresponds to 2.0 % of sucrose in the descriptions in the following Examples 8, 9 and 13, and in the cases where the sweetness corresponds to 1.5 % of sucrose in the descriptions in the following Examples 2, 5 and 14. Preferably, palatinose is contained at a sweetness contribution ratio of 30 to 100 % based on the total sweetness.

As seen from the descriptions in the following Examples 2 and 9, the effect of palatinose of giving a refreshing taste and a flinty taste is scarcely felt or sometimes felt only a little in the cases where the total sweetness is at least 0.3 % and at most 2.0 % of sucrose and the sweetness contribution ratio of palatinose is less than 20 % based on the total sweetness. Preferably, the total sweetness is 1.0 % to 2.0 %.

In the descriptions in the following Examples 10 through 13, the drinks with sweeteners other than sucrose are compared with the drinks with palatinose. It is seen that the inclusion of palatinose at a sweetness contribution ratio of 30 to 100 % based on the total sweetness attains the effect of giving a .refreshing taste and a flinty taste to drinks.

The drinks of the present invention are desirable from a health standpoint, as they do not cause any health problems such as diarrhea which may occur with the use of sugar alcohols or oligosaccharides which are known as low-sweet sweeteners. This is because palatinose is composed of glucose and fructose which are also constituent sugars of sucrose; while sucrose has α-1, 2 bond, palatinose has α-1, 6 bond which is decomposed into glucose and fructose by an enzyme in the body so that palatinose is digested in the same manner as sucrose.

As mentioned above, the drinks of the present invention present a refreshing taste, a flinty taste, and also good balance of tastes.

The effects of the present invention can be achieved even when other sweeteners such as sucrose, corn syrup, intensive sweeteners, sugar alcohols and oligosaccharides are used along with palatinose.

Particularly when the aforementioned drink is a tea-based drink, the refreshing taste, the flinty taste and the goodbalance of tastes are eminent. In addition, palatinose goes well with the taste and aroma of tea, which is desirable from an aspect of preferences of a product.

The present invention will be explained in detail below with reference to the following Examples, but the present invention shall not be limited by these Examples.

### Examples

"%" in the following Examples refers to percent by weight, unless otherwise specified.

The evaluation in the sensory tests in the Examples were made with the following five scores: 1: inferior to a control sample, 2: slightly inferior to a control sample, 3: same as a control sample, 4: slightly superior to a control sample, and 5: superior to a control sample. An average from all panelists was calculated.

### Example 1 (Drink containing an orchid flavor)

Drinks containing an orchid flavor were prepared. Acontrol sample with sucrose alone and test samples with palatinose were tested for the qualities of tastes.

The control sample was prepared as follows. A 5 times concentrated grapefruit juice (Nagaoka Koryo Co.), an orchid flavor (Nagaoka Koryo Co. product no. : NP-4836-MN) and sucrose were dissolved in mineral water (Suntory Co., product name: Minami Arupusu-no Tennen Sui) in final concentrations of 1.6 %, 0.005 %, and 1.9 %, respectively.

Test Sample 1 was prepared by substituting the sucrose in the control sample with palatinose of the amount which gave the same degree of sweetness. Test Sample 2 was prepared by substituting a half of the sucrose in the control sample with palatinose of the amount which gave the sweetness of this half of sucrose (1.9 % x 0.5 / 0.42). That is, palatinose was added in a final concentration of 4.5 % in Test Sample 1. In Test Sample 2, sucrose and palatinose were added in a final concentration of 0.95 % and a final concentration of 2.26 %, respectively.

The control sample, Test Sample 1 and Test Sample 2 were stored in a refrigerator immediately before conducting a sensory test and then served as a cold drink in the sensory test.

The sensory test was conducted with 10 panelists. The tastes of Test Sample 1 and Test Sample 2 were compared with the tastes of the control sample. The items of tastes are: smoothness, light taste, sharp end of aftertaste (a refreshing taste), goodness of flavor release, flinty taste, goodness of sweet taste, and quaffability.

The results are as shown in Table 1.

**Table 1**

| | Control Sample | Test Sample 1 | Test Sample 2 |
|---|---|---|---|
| smoothness | 3.0 | 2.8 | 3.0 |
| light taste | 3.0 | 3.9 | 3.9 |
| sharp end of aftertaste | 3.0 | 3.5 | 3.4 |
| goodness of flavor release | 3.0 | 2.9 | 2.7 |
| flinty taste | 3.0 | 3.7 | 3.9 |
| goodness of sweet taste | 3.0 | 2.9 | 3.3 |
| quaffability | 3.0 | 3.0 | 3.8 |

As seen from Table 1, both Test Samples 1 and 2 were superior to the control sample regarding the light taste, the sharp end of aftertaste and the flinty taste. Both Test Samples 1 and 2 were similar with the control sample in terms of the smoothness and the goodness of flavor release. With respect to the goodness of sweet taste and quaffability, Test Sample 1 was similar with the control sample, but Test Sample 2 was superior to the control sample.

### Example 2 (Drink containing an orchid flavor)

On drinks containing an orchid flavor, it was determined whether the effect would vary with different sweetness contribution ratios of palatinose.

Control Sample 1 was prepared by dissolving an orchid flavor (Nagaoka Koryo Co., Product No.: NP-4836-MH) in a final concentration of 0.005 % and sucrose in a final concentration of 4.5 % in mineral water (Suntory Ltd., product name: Minami Arupusu-no Tennen Sui). In Control Sample 2, the final sucrose concentration was 3.0 %. In Control Sample 3, the final sucrose concentration was 1.5 %.

Test Samples 1 (1) through (6) were prepared by replacing 100 %, 50 %, 40 %, 30 %, 20 % or 10 % of the sucrose in Control Sample 1 with palatinose of amounts which gave the same sweetness as those of the replaced amounts of sucrose. Test Samples 2 (1) through (6) were prepared similarly by replacing the sucrose in Control Sample 2. Test Samples 3 (1) through (6) were prepared similarly by replacing the sucrose in Control Sample 3.

All of the samples were stored in a refrigerator immediately before the sensory tests and then served as cold drinks for the sensory tests.

The sensory test was conducted with 8 panelists to compare the tastes of Test Samples 1 through 3 with the corresponding Control Samples 1 through 3. It was determined whether the Test Samples gave a flinty taste or a refreshing taste, compared to the control sample. If a half or more of the panelists answered positively, the effects of the invention is recognized.

Table 2 shows the formulations of the sweeteners in Test Samples 1 (1) through (6) and Control Sample 1, and the results of the sensory test.

**Table 2**

| | substitusion by palatinose(%) | formulations | | | the number of panelists who answered positively /the number of the panelists |
|---|---|---|---|---|---|
| | | palatinose(%) | sucrose(%) | water(%) | |
| Test Sample 1(1) | 100 | 10.71 | 0 | 89.29 | 7/8 |
| Test Sample 1(2) | 50 | 5.36 | 2.25 | 92.39 | 7/8 |
| Test Sample 1(3) | 40 | 4.29 | 2.70 | 93.01 | 6/8 |
| Test Sample 1(4) | 30 | 3.21 | 3.15 | 93.64 | 5/8 |
| Test Sample 1(5) | 20 | 2.14 | 3.60 | 94.26 | 3/8 |
| Test Sample 1(6) | 10 | 1.07 | 4.05 | 94.88 | 3/8 |
| Control Sample 1 | 0 | 0 | 4.50 | 95.50 | - |

Table 3 shows the formulations of the sweeteners in Test Samples 2 (1) through (6) and Control Sample 2, and the results of the sensory test.

**Table 3**

| | substitusion by palatinose(%) | formulations | | | the number of panelists who answered positively /the number of the panelists |
|---|---|---|---|---|---|
| | | palatinose(%) | sucrose(%) | water(%) | |
| Test Sample 2(1) | 100 | 7.14 | 0 | 92.86 | 7/8 |
| Test Sample 2(2) | 50 | 3.57 | 1.50 | 94.93 | 6/8 |
| Test Sample 2(3) | 40 | 2.86 | 1.80 | 95.34 | 6/8 |
| Test Sample 2(4) | 30 | 2.14 | 2.10 | 95.76 | 5/8 |
| Test Sample 2(5) | 20 | 1.43 | 2.40 | 96.17 | 3/8 |
| Test Sample 2(6) | 10 | 0.71 | 2.70 | 96.59 | 2/8 |
| Control Sample 2 | 0 | 0 | 3.00 | 97.00 | - |

Table 4 shows the formulations of the sweeteners in Test Samples 3 (1) through (6) and Control Sample 3, and the results of the sensory test.

**Table 4**

| | substitution by palatinose(%) | formulations | | | the number of panelists who answered positively /the number of the panelists |
|---|---|---|---|---|---|
| | | palatinose(%) | sucrose(%) | water(%) | |
| Test Sample 3(1) | 100 | 3.57 | 0 | 96.43 | 6/8 |
| Test Sample 3(2) | 50 | 1.79 | 0.75 | 97.46 | 6/8 |
| Test Sample 3(3) | 40 | 1.43 | 0.90 | 97.67 | 6/8 |
| Test Sample 3(4) | 30 | 1.07 | 1.05 | 97.88 | 6/8 |
| Test Sample 3(5) | 20 | 0.71 | 1.20 | 98.09 | 5/8 |
| Test Sample 3(6) | 10 | 0.36 | 1.35 | 98.29 | 3/8 |
| Control Sample 3 | 0 | 0 | 1.50 | 98.50 | - |

As seen from Tables 2 and 3, Test Samples 1 and 2 presented the flinty taste and the refreshing taste, compared to the Control Samples, when 30% or more of the sucrose was substituted with palatinose (Test Samples 1 (1) through (4), and Test Samples 2 (1) through (4)). As seen from Table 4, Test Sample 3 presented the flinty taste and the refreshing taste, compared to Control Sample 3, when 20% or more of the sucrose was substituted with palatinose (Test Samples 3 (1) through (5)).

### Example 3 (Orange tea)

On an orange tea to which an herb flavor was added, a control sample with sucrose alone and test samples with palatinose were tested for the quality of tastes.

Orange tea (orange flavored tea, Douwe Egberts Coffee & Tea International B. V. ) was added at 1 % to hot water and extracted for 3 minutes. Sucrose was added to the extract to a final concentration of 4.5 % to obtain the control sample. Test Samples (1) through (6) were prepared by replacing 100%, 50%, 40%, 30%, 20% or 10% of the sucrose in the control sample with palatinose of amounts which gave the same sweetness as those of the replaced amounts of sucrose.

All of the samples were stored in a refrigerator immediately before conducting sensory tests and then served as cold drinks for the sensory tests.

### Test 1

A sensory test was conducted with 8 panelists to compare Test Sample (1) with the control sample for tastes. The five-scale evaluation was made on the items of tastes: light taste, sharp end of aftertaste (refreshing taste), goodness of flavor release, flinty taste, goodness of sweet taste, and quaffability.

Table 5 shows the results.

**Table 5**

| | Control Sample | Test Sample (1) |
|---|---|---|
| light taste | 3.0 | 3.6 |
| sharp end of aftertaste | 3.0 | 3.8 |
| goodness of flavor release | 3.0 | 3.6 |
| flinty taste | 3.0 | 3.9 |
| goodness of sweet taste | 3.0 | 3.3 |
| quaffability | 3.0 | 4.0 |

As seen from Table 5, Test Sample (1) was superior to the control sample for all of the items.

According to the results mentioned above, the orange tea with palatinose was found to have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 6 shows the formulations of the sweeteners used in Test Samples (1) through (6) and the control sample, and the results of the sensory tests.

**Table 6**

| | substitusion by palatinose(%) | formulations | | | the number of panelists who answered positively /the number of the panelists |
|---|---|---|---|---|---|
| | | palatinose(%) | sucrose(%) | water(%) | |
| Test Sample (1) | 100 | 10.71 | 0 | 89.29 | 6/8 |
| Test Sample (2) | 50 | 5.36 | 2.25 | 92.39 | 6/8 |
| Test Sampls (3) | 40 | 4.29 | 2.70 | 93.01 | 6/8 |
| Test Sample (4) | 30 | 3.21 | 3.15 | 93.64 | 4/8 |
| Test Sample (5) | 20 | 2.14 | 3.60 | 94.26 | 2/8 |
| Test Sample (6) | 10 | 1.07 | 4.05 | 94.88 | 0/8 |
| Control Sample | 0 | 0 | 4.50 | 95.50 | - |

As seen from Table 6, the Test Samples were found to present the refreshing taste and the flinty taste, compared to the Control Sample, when 30 % or more of the sucrose was substituted with palatinose (Test Samples (1) through (4)).

### Example 4 (Hibiscus tea)

On a hibiscus tea (extract of the flower) , a control sample with sucrose alone and test samples with palatinose were tested for the quality of tastes.

Hibiscus tea (Charis Seijo Co., Ltd.) was added at 0.5 % to hot water and extracted for 3 minutes. Sucrose was added to the extract to a final concentration of 3 % to obtain the control sample. Test Samples (1) through (6) were prepared by replacing 100 %, 50 %, 40 %, 30 %, 20 % or 10 % of the sucrose in the control sample with palatinose of amounts which gave the same sweetness as those of the replaced amounts of sucrose.

All of the samples were stored in a refrigerator immediately before conducting sensory tests and then served as cold drinks for the sensory tests.

### Test 1

A sensory test was conducted with 8 panelists to compare Test Sample (1) with the control sample for tastes. The five-scale evaluation was made on the items of tastes: smoothness, light taste, sharp end of aftertaste (refreshing taste), goodness of flavor release, flinty taste, goodness of sweet taste, and quaffability.

Table 7 shows the results.

**Table 7**

| | Control Sample | Test Sample (1) |
|---|---|---|
| light taste | 3.0 | 3.6 |
| sharp end of aftertaste | 3.0 | 4.0 |
| goodness of flavor release | 3.0 | 2.5 |
| flinty taste | 3.0 | 4.0 |
| goodness of sweet taste | 3.0 | 2.6 |
| quaffability | 3.0 | 3.4 |

As seen from Table 7, Test Sample (1) was superior to the control sample regarding the light taste, the sharp end of aftertaste, the flinty taste, and the quaffability.

According to the results mentioned above, the hibiscus tea with palatinose was found to have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 8 shows the formulations of sweeteners used in Test Samples (1) through (6) and the control sample, and the results of sensory tests.

**Table 8**

| | substitusion by palatinose(%) | formulations | | | the number of panelists who answered positively /the number of the panelists |
|---|---|---|---|---|---|
| | | palatinose(%) | sucrose(%) | water(%) | |
| Test Sample (1) | 100 | 7.14 | 0 | 92.86 | 6/8 |
| Test Sample (2) | 50 | 3.57 | 1.50 | 94.93 | 5/8 |
| Test Sample (3) | 40 | 2.86 | 1.80 | 95.34 | 5/8 |
| Test Sample (4) | 30 | 2.14 | 2.10 | 95.76 | 4/8 |
| Test Sample (5) | 20 | 1.43 | 2.40 | 96.17 | 3/8 |
| Test Sample (6) | 10 | 0.71 | 2.70 | 96.59 | 0/8 |
| Control Sample | 0 | 0 | 3.00 | 97.00 | - |

As seen from Table 8, the Test Samples were found to present the refreshing taste and the flinty taste, compared to the control sample, when 30 % or more of the sucrose was substituted with palatinose (Test Samples (1) through (4)).

### Example 5 (Rosehip tea)

On a rosehip tea (extract of the herb), a control sample with sucrose alone and test samples with palatinose were tested for the quality of tastes.

Rosehip tea (Charis Seijo Co., Ltd.) was added at 0.5 % to hot water and extracted for 3 minutes. Sucrose was added to the extract to a final concentration of 1.5 % to obtain the control sample. Test Samples (1) through (6) were prepared by replacing 100 %, 50 %, 40 %, 30 %, 20 % or 10 % of the sucrose in the control sample with palatinose of amounts which gave the same sweetness as those of the replaced amounts of sucrose.

All of the samples were stored in a refrigerator immediately before conducting sensory tests and then served as cold drinks for the sensory tests.

### Test 1

A sensory test was conducted with 8 panelists to compare Test Sample (1) with the control sample for tastes. The five-scale evaluation was made on the items of tastes: light taste, sharp end of aftertaste (refreshing taste), goodness of flavor release, flinty taste, goodness of sweet taste, and quaffability.

Table 9 shows the results.

**Table 9**

| | Control Sample | Test Sample (1) |
|---|---|---|
| light taste | 3.0 | 3.8 |
| sharp end of aftertaste | 3.0 | 3.8 |
| goodness of flavor release | 3.0 | 2.9 |
| flinty taste | 3.0 | 3.7 |
| goodness of sweet taste | 3.0 | 2.9 |
| quaffability | 3.0 | 3.4 |

As seen from Table 9, Test Sample (1) was superior to the control sample regarding the light taste, the sharp end of aftertaste, the flinty taste, and the quaffability.

According to the results mentioned above, the rosehip tea with palatinose was found to have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 10 shows the formulations of the sweeteners used in Test Samples (1) through (6) and the control sample, and the results of sensory tests.

**Table 10**

| | substitution by palatinose(%) | formulation | | | the number of panelists who answered positively /the number of the panelists |
|---|---|---|---|---|---|
| | | palatinose(%) | sucrose(%) | water(%) | |
| Test Sample (1) | 100 | 3.57 | 0 | 96.43 | 6/8 |
| Test Sample (2) | 50 | 1.79 | 0.75 | 97.46 | 6/8 |
| Test Sample (3) | 40 | 1.43 | 0.90 | 97.67 | 6/8 |
| Test Sample (4) | 30 | 1.07 | 1.05 | 97.88 | 6/8 |
| Test Sample (5) | 20 | 0.71 | 1.20 | 98.09 | 5/8 |
| Test Sample (6) | 10 | 0.36 | 1.35 | 98.29 | 5/8 |
| Control Sample | 0 | 0 | 1.50 | 98.50 | - |

As seen from Table 10, the Test Samples were found to present the refreshing taste and the flinty taste, compared to the control sample, when 10 % or more of the sucrose was substituted with palatinose (Test Samples (1) through (6)).

### Example 6 (Peppermint tea)

On a peppermint tea (extract of the herb), a control sample with sucrose alone and test samples with palatinose were tested for the quality of tastes.

Peppermint tea (TraditionalMedicinals) was added at 0.5% to hot water and extracted for 3 minutes. Sucrose was added to the extract to a final concentration of 3 % to obtain the control sample. Test Samples (1) through (6) were prepared by replacing 100 %, 50 %, 40 %, 30 %, 20 % or 10 % of the sucrose in the control sample with palatinose of amounts which gave the same sweetness as those of the replaced amounts of sucrose.

All of the samples were stored in a refrigerator immediately before conducting sensory tests and then served as cold drinks for the sensory tests.

### Test 1

A sensory test was conducted with 7 panelists to compare Test Sample (1) with the control sample for tastes. The five-scale evaluation was made on the items of tastes: light taste, sharp end of aftertaste (refreshing taste), goodness of flavor release, flinty taste, goodness of sweet taste, and quaffability.

Table 11 shows the results.

**Table 11**

| | Control Sample | Test Sample (1) |
|---|---|---|
| light taste | 3.0 | 3.4 |
| sharp end of aftertaste | 3.0 | 3.3 |
| goodness of flavor release | 3.0 | 3.0 |
| flinty taste | 3.0 | 3.3 |
| goodness of sweet taste | 3.0 | 2.6 |
| quaffability | 3.0 | 2.9 |

As seen from Table 11, Test Sample (1) was superior to the control sample regarding the light taste, the sharp end of aftertaste, and the flinty taste.

According to the results mentioned above, the peppermint tea with palatinose was found to have the enhanced refreshing taste and flinty taste, compared to the drink with no palatinose. Test 2

Test Samples (1) through (6) were tested for any difference in the effects with the different sweetness contribution ratios. A sensory test was conducted with 7 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 12 shows the formulations of the sweeteners used in Test Samples (1) through (6) and the control sample, and the results of sensory tests.

**Table 12**

| | substitusion by palatinose(%) | formulations | | | the number of panelists who answered positively /the number of the panelists |
|---|---|---|---|---|---|
| | | palatinose(%) | sucrose(%) | water(%) | |
| Test Sample (1) | 100 | 7.14 | 0 | 92.86 | 5/7 |
| Test Sample (2) | 50 | 3.57 | 1.50 | 94:93 | 5/7 |
| Test Sample (3) | 40 | 2.86 | 1.80 | 95.34 | 5/7 |
| Test Sample (4) | 30 | 2.14 | 2.10 | 95.76 | 4/7 |
| Test Sample (5) | 20 | 1.43 | 2.40 | 96.17 | 2/7 |
| Test Sample (6) | 10 | 0.71 | 2.70 | 96.59 | 0/7 |
| Control Sample | 0 | 0 | 3.00 | 97.00 | - |

As seen from Table 12, the Test Samples were found to present the refreshing taste and the flinty taste, compared to the control sample, when 30 % or more of the sucrose was substituted with palatinose (Test Samples (1) through. (4)).

### Example 7 (Spearmint tea)

On a hot spearmint tea (extract of the herb), a control sample with sucrose alone and test samples with palatinose were tested for the quality of tastes.

Spearmint tea (Charis Seijo Co., Ltd.) was added at 0.5 % to hot water and extracted for 3 minutes. Sucrose was added to the extract to a final concentration of 4.5 % to obtain the control sample. Test Samples (1) through (6) were prepared by replacing 100 %, 50 %, 40 %, 30 %, 20 % or 10 % of the sucrose in the control sample with palatinose of amounts which gave the same sweetness as those of the replaced amounts of sucrose.

Immediately after the preparation, all of the samples were served as a hot tea for the sensory tests on tastes.

### Test 1

A sensory test was conducted with 8 panelists to compare Test Sample (1) with the control sample for tastes. The five-scale evaluation was made on the items of tastes: light taste, sharp end of aftertaste (refreshing taste), goodness of flavor release, flinty taste, goodness of sweet taste, and quaffability.

Table 13 shows the results.

**Table 13**

| | Control Sample | Test Sample (1) |
|---|---|---|
| light taste | 3.0 | 3.6 |
| sharp end of aftertaste | 3.0 | 3.5 |
| goodness of flavor release | 3.0 | 2.9 |
| flinty taste | 3.0 | 3.6 |
| goodness of sweet taste | 3.0 | 3.3 |
| quaffability | 3.0 | 3.4 |

As seen from Table 13, Test Sample (1) was superior to the control sample regarding the light taste, the sharp end of aftertaste, the flinty taste, and the quaffability.

According to the results mentioned above, the hot spearmint tea with palatinose was found to have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 14 shows the formulations of the sweeteners used in Test Samples (1) through (6) and the control sample, and the results of sensory tests.

**Table 14**

| | substitusion by palatinose(%) | formulations | | | the number of panelists who answered positively /the number of the panelists |
|---|---|---|---|---|---|
| | | palatinose(%) | sucrose(%) | water(%) | |
| Test Sample (1) | 100 | 10.71 | 0 | 89.29 | 5/8 |
| Test Sample (2) | 50 | 5.36 | 2.25 | 92.39 | 5/8 |
| Test Sample (3) | 40 | 4.29 | 2.70 | 93.01 | 4/8 |
| Test Sample (4) | 30 | 3.21 | 3.15 | 93.64 | 4/8 |
| Test Sample (5) | 20 | 2.14 | 3.60 | 94.26 | 2/8 |
| Test Sample (6) | 10 | 1.07 | 4.05 | 94.88 | 1/8 |
| Control Sample | 0 | 0 | 4.50 | 95.50 | - |

As seen from Table 14, the Test Samples were found to present the refreshing taste and the flinty taste, compared to the control sample, when 30 % or more of the sucrose was substituted with palatinose (Test Samples (1) through (4)).

### Example 8 (Jasmine tea, hot)

On a hot jasmine tea (tea containing the flower extract) , a control sample with sucrose alone and test samples with palatinose were tested for the quality of tastes.

Black tea (Mitsui Norin Co., Ltd., product name: Nitto Tea DAY & DAY teabag) and jasmine (Naturalthera) were added at 0.4% and 0.05%, respectively, to hot water and extracted for 3 minutes. Sucrose was added to the extract to a final concentration of 2 % to obtain the control sample. Test Samples (1) through (6) were prepared by replacing 100 %, 50 %, 40 %, 30 %, 20 % or 10 % of the sucrose in the control sample with palatinose of amounts which gave the same sweetness as those of the replaced amounts of sucrose.

Immediately after the preparation, all of the samples were served as a hot tea for the sensory tests on tastes.

### Test 1

A sensory test was conducted with 8 panelists to compare Test Sample (1) with the control sample for tastes. The five-scale evaluation was made on the items of tastes: light taste, sharp end of aftertaste (refreshing taste), goodness of flavor release, flinty taste, goodness of sweet taste, and quaffability.

Table 15 shows the results.

**Table 15**

| | Control Sample | Test Sample (1) |
|---|---|---|
| light taste | 3.0 | 3.9 |
| sharp end of aftertaste | 3.0 | 4.2 |
| goodness of flavor release | 3.0 | 3.0 |
| flinty taste | 3.0 | 4.0 |
| goodness of sweet taste | 3.0 | 2.8 |
| quaffability | 3.0 | 3.4 |

As seen from Table 15, Test Sample (1) was superior to the control sample regarding the light taste, the sharp end of aftertaste, the flinty taste, and the quaffability.

According to the results mentioned above, the hot jasmine tea with palatinose was found to have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 16 shows the formulations of the sweeteners used in Test Samples (1) through (6) and the control sample, and the results of sensory tests.

**Table 16**

| | substitution by palatinose(%) | formulations | | | the number of panelists who answered positively /the number of the panelists |
|---|---|---|---|---|---|
| | | palatinose(%) | sucrose(%) | water(%) | |
| Test Sample (1) | 100 | 4.76 | 0 | 95.24 | 7/8 |
| Test Sample (2) | 50 | 2.38 | 1.00 | 96.62 | 7/8 |
| Test Sample (3) | 40 | 1.90 | 1.20 | 96.90 | 7/8 |
| Test Sample (4) | 30 | 1.43 | .1.40 | 97.17 | 6/8 |
| Test Sample (5) | 20 | 0.95 | 1.60 | 97.45 | 5/8 |
| Test Sample (6) | 10 | 0.48 | 1.80 | 97.72 | 4/8 |
| Control Sample | 0 | 0 | 2.00 | 98.00 | - |

As seen from Table 16, the Test Samples were found to present the refreshing taste and the flinty taste, compared to the control sample, when 10 % or more of the sucrose was substituted with palatinose (Test Samples (1) through (6)).

### Example 9 (Rosehip and hibiscus tea)

On a blend tea of rosehip (herb) and hibiscus (flower), a control sample with sucrose alone and test samples with palatinose were tested for the quality of tastes.

Rosehip and hibiscus blend tea (The London Fruit & Herb Company, product name: Rosehip with Hibiscus) was added at 0.5 % to hot water and extracted for 3 minutes. Sucrose was added to the extract to a final concentration of 2.0% to obtain the control sample. Test Samples (1) through (6) were prepared by replacing 100 %, 50 %, 40 %, 30 %, 20 % or 10 % of the sucrose in the control sample with palatinose of amounts which gave the same sweetness as those of the replaced amounts of sucrose.

All of the samples were stored in a refrigerator immediately before conducting a sensory test and then served as cold drinks for the sensory test.

### Test 1

A sensory test was conducted with 8 panelists to compare Test Sample (1) with the control sample for tastes. The five-scale evaluation was made on the items of tastes: light taste, sharp end of aftertaste (refreshing taste), goodness of flavor release, flinty taste, goodness of sweet taste, and quaffability.

Table 17 shows the results.

**Table 17**

| | Control Sample | Test Sample (1) |
|---|---|---|
| light taste | 3.0 | 3.4 |
| sharp end of aftertaste | 3.0 | 4.0 |
| goodness of flavor release | 3.0 | 3.0 |
| flinty taste | 3.0 | 3.5 |
| goodness of sweet taste | 3.0 | 2.9 |
| quaffability | 3.0 | 3.1 |

As seen from Table 17, Test Sample (1) was superior to the control sample regarding the light taste, the sharp end of aftertaste, the flinty taste, and the quaffability.

According to the results mentioned above, the rosehip and hibiscus tea with palatinose was found to have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 18 shows the formulations of the sweeteners used in Test Samples (1) through (6) and the control sample, and the results of sensory tests.

**Table 18**

| | substitution by palatinose(%) | formulations | | | the number of panelists who answered positively /the number of the panelists |
|---|---|---|---|---|---|
| | | palatinose(%) | sucrose(%) | water(%) | |
| Test Sample (1) | 100 | 4.76 | 0 | 95.24 | 5/8 |
| Test Sample (2) | 50 | 2.38 | 1.00 | 96.62 | 5/8 |
| Test Sample (3) | 40 | 1.90 | 1.20 | 96.90 | 5/8 |
| Test Sample (4) | 30 | 1.43 | 1.40 | 97.17 | 5/8 |
| Test Sample (5) | 20 | 0.95 | 1.60 | 97.45 | 4/8 |
| Test Sample (6) | 10 | 0.48 | 1.80 | 97.72 | 1/8 |
| Control Sample | 0 | 0 | 2.00 | 98.00 | - |

As seen from Table 18, the Test Samples were found to present the refreshing taste and the flinty taste, compared to the control sample, when 20% or more of the sucrose was substituted with palatinose (Test Samples (1) through (5)).

### Example 10 (Rosehip and hibiscus blend tea)

On a blend tea of rosehip (herb) and hibiscus (flower), a control sample with fructose-glucose liquid sugar alone and test samples with palatinose were tested for the quality of tastes.

Rosehip and hibiscus blend tea (The London Fruits and Herb Company, product name: Rosehip with Hibiscus) was added at 0.5 % to hot water and extracted for 3 minutes. Fructose-glucose liquid sugar (San-ei Touka Co., product name: EP-O, 75 %) was added to the extract to a final concentration of 6.0 % to obtain the control sample. The amount of the fructose-glucose liquid sugar added corresponds to the sweetness of 4.5 % of sucrose. Test Samples (1) through (6) were prepared by replacing 100 %, 50 %, 40 %, 30 %, 20 % or 10 % of the fructose-glucose liquid sugar in the control sample with palatinose of amounts which gave the same sweetness as those of the replaced amounts of fructose-glucose liquid sugar.

All of the samples were stored in a refrigerator immediately before conducting sensory tests and then served as cold drinks for the sensory tests.

### Test 1

A sensory test was conducted with 8 panelists to compare Test Sample (1) with the control sample for tastes. The five-scale evaluation was made on the items of tastes: light taste, sharp end of aftertaste (refreshing taste), goodness of flavor release, flinty taste, goodness of sweet taste, and quaffability.

Table 19 shows the results.

**Table 19**

| | Control Sample | Test Sample (1) |
|---|---|---|
| light taste | 3.0 | 3.8 |
| sharp end of aftertaste | 3.0 | 4.0 |
| goodness of flavor release | 3.0 | 3.0 |
| flinty taste | 3.0 | 4.1 |
| goodness of sweet taste | 3.0 | 3.4 |
| quaffability | 3.0 | 3.6 |

As seen from Table 19, Test Sample (1) was superior to the control sample regarding the light taste, the sharp end of aftertaste, the flinty taste, and the quaffability.

According to the results mentioned above, the rosehip and hibiscus blend tea with palatinose was found to have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 20 shows the formulations of the sweeteners used in Test Samples (1) through (6) and the control sample, and the results of sensory tests.

**Table 20**

| | substitution by palatinose(%) | formulations | | | the number of panelists who answered positively /the number of the panelists |
|---|---|---|---|---|---|
| | | palatinose(%) | fructose-glucose liquid sugar(%) | water(%) | |
| Test Sample (1) | 100 | 10.71 | 0 | 89.29 | 7/8 |
| Test Sample (2) | 50 | 536 | 3.00 | 91.64 | 7/8 |
| Test Sample (3) | 40 | 4.29 | 3.60 | 92.11 | 7/8 |
| Test Sample (4) | 30 | 3-21 | 4.20 | 92.59 | 7/8 |
| Test Sample (5) | 20 | 2.14 | 4.80 | 93.06 | 3/8 |
| Test Sample (6) | 10 | 1.07 | 5.40 | 93.53 | 3/8 |
| Control Sample | 0 | 0 | 6.00 | 94.00 | - |

As seen from Table 20, the Test Samples were found to present the refreshing taste and the flinty taste, compared to the control sample, when 30 % or more of the fructose-glucose liquid sugar was substituted with palatinose (Test Samples (1) through (4)).

### Example 11 (Orange flower tea)

On an orange flower tea (extract of the flower) , a control sample with fructose alone and test samples with palatinose were tested for the quality of tastes.

Orange flower (Charis Seijo Co., Ltd.) was added at 0.5% to hot water and extracted for 3 minutes. Fructose was added to the extract to a final concentration of 2.22 % to obtain the control sample. The amount of the fructose added corresponds to the sweetness of 3.0 % of sucrose. Test Samples (1) through (6) were prepared by replacing 100 %, 50 %, 40 %, 30 %, 20 % or 10 % of the fructose, in the control sample with palatinose of amounts which gave the same sweetness as those of the replaced amounts of fructose.

All of the samples were stored in a refrigerator immediately before conducting sensory tests and then served as cold drinks for the sensory tests.

### Test 1

A sensory test was conducted with 8 panelists to compare Test Sample (1) with the control sample for tastes. The five-scale evaluation was made on the items of tastes: light taste, sharp end of aftertaste (refreshing taste), goodness of flavor release, flinty taste, goodness of sweet taste, and quaffability.

Table 21 shows the results.

**Table 21**

| | Control Sample | Test Sample (1) |
|---|---|---|
| light taste | 3.0 | 3.9 |
| sharp end of aftertaste | 3.0 | 3.6 |
| goodness of flavor release | 3.0 | 3.0 |
| flinty taste | 3.0 | 3.9 |
| goodness of sweet taste | 3.0 | 3.6 |
| quaffability | 3.0 | 3.9 |

As seen from Table 21, Test Sample (1) was superior to the control sample regarding the light taste, the sharp end of aftertaste, the flinty taste, the goodness of sweet taste, and the quaffability. There was no difference in the goodness of flavor release.

According to the results mentioned above, the orange flower tea with palatinose was found to have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 22 shows the formulations of the sweeteners used in Test Samples (1) through (6) and the control sample, and the results of sensory tests.

**Table 22**

| | substitusion by palatinose(%) | formulations | | | the number of panelists who answered positively /the number of the panelists |
|---|---|---|---|---|---|
| | | palatinose(%) | fructose(%) | water(%) | |
| Test Sample (1) | 100 | 7.14 | 0 | 92.86 | 6/8 |
| Test Sample (2) | 50 | 3.57 | 1.11 | 95.32 | 6/8 |
| Test Sample (3) | 40 | 2.86 | 1.33 | 95.81 | 5/8 |
| Test Sample (4) | 30 | 2.14 | 1.55 | 96.31 | 5/8 |
| Test Sample (5) | 20 | 1.43 | 1.77 | 96.80 | 4/8 |
| Test Sample (6) | 10 | 0.71 | 2.00 | 97.29 | 4/8 |
| Control Sample | 0 | 0 | 2.22 | 97.78 | - |

As seen from Table 22, the Test Samples were found to present the refreshing taste and the flinty taste, compared to the control sample, when 10 % or more of the fructose was substituted with palatinose (Test Samples (1) through (6)).

### Example 12 (Orange flower tea)

On an orange flower tea (extract of the flower), a control sample with acesulfame potassium alone and test samples with palatinose were tested for the quality of tastes.

Orange flower (Charis Seijo Co., Ltd.) was added at 0.5% to hot water and extracted for 3 minutes. Acesulfame potassium was added to the extract to a final concentration of 0.0225 % to obtain the control sample. The amount of the acesulfame potassium corresponds to the sweetness of 4.5 % of sucrose. Test Samples (1) through (6) were prepared by replacing 100 %, 50 %, 40 %, 30 %, 20 % or 10 % of the acesulfame potassium in the control sample with palatinose of amounts which gave the same sweetness as those of the replaced amounts of acesulfame potassium.

All of the samples were stored in a refrigerator immediately before conducting sensory tests and then served as cold drinks for the sensory tests.

### Test 1

A sensory test was conducted with 8 panelists to compare Test Sample (1) with the control sample for tastes. The five-scale evaluation was made on the items of tastes: light taste, sharp end of aftertaste (refreshing taste), goodness of flavor release, flinty taste, goodness of sweet taste, and quaffability.

Table 23 shows the results.

**Table 23**

| | Control Sample | Test Sample (1) |
|---|---|---|
| light taste | 3.0 | 3.4 |
| sharp end of aftertaste | 3.0 | 3.6 |
| goodness of flavor release | 3.0 | 3.3 |
| flinty taste | 3.0 | 3.5 |
| goodness of sweet taste | 3.0 | 3.5 |
| quaffability | 3.0 | 3.4 |

As seen from Table 23, Test Sample (1) was superior to the control sample for all of the items.

According to the results mentioned above, the orange flower tea with palatinose was found to have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 24 shows the formulations of the sweeteners used in Test Samples (1) through (6) and the control sample, and the results of sensory tests.

**Table 24**

| | substitution by palatinose(%) | formulations | | | the number of panelists who answered positively /the number of the panelists |
|---|---|---|---|---|---|
| | | palatinose(%) | acesulfarne potassium(%) | water(%) | |
| Test Sample (1) | 100 | 10.71 | 0 | 89.29 | 6/8 |
| Test Sample (2) | 50 | 5.36 | 0.0113 | 94.63 | 6/8 |
| Test Sample (3) | 40 | 4.28 | 0.0135 | 95.70 | 5/8 |
| Test Sample (4) | 30 | 3.21 | 0.0158 | 96.77 | 5/8 |
| Test Sample (5) | 20 | 2.14 | 0.0180 | 97.84 | 4/8 |
| Test Sample (6) | 10 | 1.07 | 0.0203 | 98.91 | 4/8 |
| Control Sample | 0 | 0 | 0.0225 | 99.98 | - |

As seen from Table 24, the Test Samples were found to present the refreshing taste and the flinty taste, compared to the control sample, when 10 % or more of the acesulfame potassium was substituted with palatinose (Test Samples (1) through (6)).

### Example 13 (Lemon grass tea)

On a lemon grass tea (extract of the herb) , a control sample with a mixed sweetner of erythritol and stevia, and test samples with palatinose were tested for the quality of tastes.

Lemon grass (Charis Seijo Co., Ltd.) was added at 0.5% to hot water and extracted for 3 minutes. A mixed sweetner of erythritol and stevia (Asada-ame Co., product name: Erythrim) was added to the extract to a final concentration of 0.72 % to obtain the control sample. The composition of Erythrim was as follows: erythritol: 98.44 %, stevia: 1.52 %, and flavor: 0.04 %. The degree of sweetness was 2.78 times as much as that of sucrose. The amount of the mixed sweetener added corresponds to the sweetness of 2 % of sucrose. Test Samples (1) through (6) were prepared by replacing 100 %, 50 %, 40 %, 30 %, 20 % or 10 % of Erythrim in the control sample with palatinose of amounts which gave the same sweetness as those of the replaced amounts of Erythrim.

All of the samples were stored in a refrigerator immediately before conducting sensory tests and then served as cold drinks for the sensory tests.

### Test 1

A sensory test was conducted with 8 panelists to compare Test Sample (1) with the control sample for tastes. The five-scale evaluation was made on the items of tastes: light taste, sharp end of aftertaste (refreshing taste) , goodness of flavor release, flinty taste, goodness of sweet taste, and quaffability.

Table 25 shows the results.

**Table 25**

| | Control Sample | Test Sample (1) |
|---|---|---|
| light taste | 3.0 | 4.6 |
| sharp end of aftertaste | 3.0 | 4.5 |
| goodness of flavor release | 3.0 | 3.4 |
| flinty taste | 3.0 | 4.4 |
| goodness of sweet taste | 3.0 | 3.5 |
| quaffability | 3.0 | 4.0 |

As seen from Table 25, Test Sample (1) was superior to the control sample all of the items.

According to the results mentioned above, the lemon grass tea with palatinose was found to have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 26 shows the formulations of the sweeteners used in Test Samples (1) through (6) and the control sample, and the results of sensory tests.

**Table 26**

| | substitution by palatinose(%) | formulations | | | the number of panelists who answered positively /the number of the panelists |
|---|---|---|---|---|---|
| | | palatinose(%) | Erythrim(%) | water(%) | |
| Test Sample (1) | 100 | 4.76 | 0 | 95.24 | 7/8 |
| Test Sample (2) | 50 | 2.38 | 0.360 | 97.26 | 7/8 |
| Test Sample (3) | 40 | 1.90 | 0.432 | 97.67 | 7/8 |
| Test Sample (4) | 30 | 1.43 | 0.504 | 98.07 | 5/8 |
| Test Sample (5) | 20 | 0.95 | 0.576 | 98.47 | 4/8 |
| Test Sample (6) | 10 | 0.48 | 0.647 | 98.87 | 4/8 |
| Control Sample | 0 | 0 | 0.719 | 99.28 | - |

As seen from Table 2 6, the Test Samples were found to present the refreshing taste and the flinty taste, compared to the control sample, when 10 % or more of Erythrim was substituted with palatinose (Test Samples (1) through (6)).

### Example 14 (Rose tea)

On a rose tea containing rose (extract of flower rose), a control sample with sucrose alone and test samples with palatinose were tested for the quality of tastes.

Rose red (Naturalthera Co., Ltd.) and black tea (Mitsui Norin Co., Ltd. product name: Nitto Tea DAY & DAY teabag) were added at 0.25 % and 0.5 %, respectively, to hot water and extracted for 3 minutes. Sucrose was added to the extract to a final concentration of 4.5 % to obtain Control Sample 1. In Control Sample 2, the final sucrose concentration was 3.0 %. In Control Sample 3, the final sucrose concentration was 1.5 %.

Test Samples 1 (1) through (6) were prepared by replacing 100 %, 50 %, 40 %, 30 %, 20 % or 10 % of the sucrose in Control Sample 1 with palatinose of amounts which gave the same sweetness as those of the replaced amounts of sucrose. Test Samples 2 (1) through (6) were prepared similarly by replacing the sucrose in Control Sample.2. Test Samples 3 (1) through (6) were prepared similarly by replacing the sucrose in Control Sample 3.

All of the samples were stored in a refrigerator immediately before conducting sensory tests and then served as cold drinks for the sensory tests.

### Test 1

The sensory test was conductedwith 8 panelists to compare Test Sample 1 (1), Test Sample 2 (1) and Test Sample 3 (1) with the corresponding Control Samples 1 through 3 for tastes. The five-scale evaluation was made on the items of tastes: light taste, sharp end of aftertaste (refreshing taste), goodness of flavor release, flinty taste, goodness of sweet taste, and quaffability.

Tables 27, 28 and 29 show the results.

**Table 27**

| | Control Sample | Test Sample 1(1) |
|---|---|---|
| light taste | 3.0 | 3.8 |
| sharp end of aftertaste | 3.0 | 3.8 |
| goodness of flavor release | 3.0 | 2.9 |
| flinty taste | 3.0 | 3.7 |
| goodness of sweet taste | 3.0 | 2.9 |
| quaffability | 3.0 | 3.4 |

**Table 28**

| | Control Sample | Test Sample 2(1) |
|---|---|---|
| light taste | 3.0 | 3.8 |
| sharp end of aftertaste | 3.0 | 4.0 |
| goodness of flavor release | 3.0 | 3.0 |
| flinty taste | 3.0 | 4.0 |
| goodness of sweet taste | 3.0 | 2.5 |
| quaffability | 3.0 | 3.3 |

**Table 29**

| | Control Sample | Test Sample 3(1) |
|---|---|---|
| light taste | 3.0 | 4.0 |
| sharp end of aftertaste | 3.0 | 3.9 |
| goodness of flavor release | 3.0 | 3.0 |
| flinty taste | 3.0 | 3.9 |
| goodness of sweet taste | 3.0 | 2.5 |
| quaffability | 3.0 | 3.5 |

As seen from Tables 27 through 29, Test Sample 1 (1) , Test Sample 2 (1) and Test Sample 3 (1) were superior to Control Samples 1 through 3, respectively, regarding the light taste, the sharp endof aftertaste, the flinty taste, and the quaffability. There was no difference in the other items.

According to the results mentioned above, each the rose tea with palatinose was found to have the enhanced refreshing taste and flinty taste, compared to the corresponding drink with no palatinose and with sucrose of 4.5 %, 3.0 % or 1.5 %.

### Test 2

A sensory test was conducted with 8 panelists to compare Test Samples 1 through 3 with the corresponding Control Samples for tastes. It was determined whether the Test Samples gave a refreshing taste or a flinty taste, compared to the control sample for any difference in the effects with the different sweetness contribution ratios. If a half or more of the panelists answered positively, the effects of the invention was recognized.

Table 30 shows the formulations of the sweeteners used in Test Samples 1 (1) through (6) and Control Sample 1, and the results of sensory tests.

**Table 30**

| | substitusion by palatinose(%) | formulations | | | the number of paneliste who answered positively /the number of the panelists |
|---|---|---|---|---|---|
| | | palatinose(%) | sucrose(%) | water(%) | |
| Test Sample 1(1) | 100 | 10.71 | 0 | 89.29 | 8/8 |
| Test Sample 1(2) | 50 | 5.36 | 2.25 | 92.39 | 8/8 |
| Test Sample 1(3) | 40 | 4.29 | 2.70 | 93.01 | 7/8 |
| Test Sample 1(4) | 30 | 3.21 | 3.15 | 93.64 | 6/8 |
| Test Sample 1(5) | 20 | 2.14 | 3.60 | 94.26 | 4/8 |
| Test Sample 1(6) | 10 | 1.07 | 4.05 | 94.88 | 4/8 |
| Control Sample 1 | 0 | 0 | 4.50 | 95.50 | - |

Table 31 shows the formulations of the sweeteners used in Test Samples 2 (1) through (6) and Control Sample 2, and the results of sensory tests.

**Table 31**

| | substitusion by palatinose(%) | formulations | | | the number of panelists who answered positively /the number of the panelists |
|---|---|---|---|---|---|
| | | palatinose(%) | sucrose(%) | water(%) | |
| Test Sample 2(1) | 100 | 7.14 | 0 | 92.86 | 7/8 |
| Test Sample 2(2) | 50 | 3.57 | 1.50 | 94.93 | 7/8 |
| Test Sample 2(3) | 40 | 2.86 | 1.80 | 95.34 | 7/8 |
| Test Sample 2(4) | 30 | 2.14 | 2.10 | 95.76 | 7/8 |
| Test Sample 2(5) | 20 | 1.43 | 2.40 | 96.17 | 7/8 |
| Test Sample 2(6) | 10 | 0.71 | 2.70 | 96.59 | 3/8 |
| Control Sample 2 | 0 | 0 | 3.00 | 97.00 | - |

Table 32 shows the formulations of the sweeteners used in Test Samples 3 (1) through (6) and Control Sample 3, and the results of sensory tests.

**Table 32**

| | substitusion by palatinose(%) | formulations | | | the number of panelists who answered positively /the number of the panelists |
|---|---|---|---|---|---|
| | | palatinose(%) | sucrose(%) | water(%) | |
| Test Sample 3(1) | 100 | 3.57 | 0 | 96.43 | 6/8 |
| Test Sample 3(2) | 50 | 1.79 | 0.75 | 97.46 | 6/8 |
| Test Sample 3(3) | 40 | 1.43 | 0.90 | 97.67 | 6/8 |
| Test Sample 3(4) | 30 | 1.07 | 1.05 | 97.88 | 5/8 |
| Test Sample 3(5) | 20 | 0.71 | 1.20 | 98.09 | 5/8 |
| Test Sample 3(6) | 10 | 0.36 | 1.35 | 98.29 | 5/8 |
| Control Sample 3 | 0 | 0 | 1.50 | 98.50 | - |

As seen from Tables 30 through 32, Test Sample 1 and Test Sample 3 were found to present the refreshing taste and the flinty taste, compared to the control samples, when 10 %.or more of the sucrose was substituted with palatinose (Test Samples 1 (1) through (6) and Test Samples 3 (1) through (6)). As seen from Table 31; Test Sample 2 was found to present the refreshing taste and the flinty taste, compared to the control sample, when 20 % or more of the sucrose was substituted with palatinose (Test Samples 2 (1) through (5)).

### Example 15 (Linden tea)

On a linden tea (extract of the herb), a control sample with sucrose alone and test samples with palatinose were tested for the quality of tastes.

Linden cut tea (Charis Seijo Co., Ltd.) was added at 0.5 % to hot water and extracted for 3 minutes. Sucrose was added to the extract to a final concentration of 1.0 % to obtain the control sample. Test samples (1) through (6) were prepared by replacing 100 %, 50 %, 40 %, 30 %, 20 % or 10 % of the sucrose in the control sample with palatinose of amounts which gave the .same sweetness as those of the replaced amounts of sucrose.

All of the samples were stored in a refrigerator immediately before conducting sensory tests and then served as cold drinks for the sensory tests.

### Test 1

A sensory test was conducted with 8 panelists to compare Test Sample (1) with the control sample for tastes. The five-scale evaluation was made on the items of tastes: light taste, sharp end of aftertaste (refreshing taste), goodness of flavor release, flinty taste, goodness of sweet taste, and quaffability.

Table 33 shows the results.

**Table 33**

| | Control Sample | Test Sample (1) |
|---|---|---|
| light taste | 3.0 | 4.0 |
| sharp end of aftertaste | 3.0 | 4.3 |
| goodness of flavor release | 3.0 | 2.8 |
| flinty taste | 3.0 | 4.1 |
| goodness of sweet taste | 3.0 | 3.2 |
| quaffability | 3.0 | 3.4 |

As seen from Table 33, Test Sample (1) was superior to the control sample regarding the light taste, the sharp end of aftertaste, the flinty taste, the goodness of sweet taste, and the quaffability. There was no difference in the goodness of flavor release.

According to the results mentioned above, the linden cut tea with palatinose was found to have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 34 shows the formulations of the sweeteners used in Test Samples (1) through (6) and the control sample, and the results of sensory tests.

**Table 34**

| | substitusion by palatinose(%) | formulations | | | the number of panelists who answered positively /the number of the panelists |
|---|---|---|---|---|---|
| | | palatinose(%) | sucrose(%) | water(%) | |
| Test Sample (1) | 100 | 2.38 | 0 | 97.62 | 7/8 |
| Test Sample (2) | 50 | 1.19 | 0.50 | 98.31 | 7/8 |
| Test Sample (3) | 40 | 0.95 | 0.60 | 98.45 | 7/8 |
| Test Sample (4) | 30 | 0.71 | 0.70 | 98.59 | 7/8 |
| Test Sample (5) | 20 | 0.48 | 0.80 | 98.72 | 5/8 |
| Test Sample (6) | 10 | 0.24 | 0.90 | 98.86 | 3/8 |
| Control Sample | 0 | 0 | 1.00 | 99.00 | - |

As seen fromTable 34, the Test Samples were found to present the refreshing taste and the flinty taste, compared to the control sample, when 20 % or more of the sucrose was substituted with palatinose (Test Samples (1) through (5)).

### Example 16 (Herb extract-flavored tea)

On a tea flavored with an herb extract, a control sample with sucrose alone and test samples with palatinose were tested for the quality of tastes.

Black tea (Mitsui Norin Co., Ltd., product name: Nitto Tea DAY & DAY teabag) was added at 0.5 % to hot water and extracted for 3 minutes. An herb flavor (Hasegawa Koryo Co., Ltd., product name: Herb Extract Flavor BF-765) which was a mixture comprising mainly cinnamon and ginger was added at 0.2 %. Sucrose was added to the extract to a final concentration of 3.0 % to obtain the control sample. Test Samples (1) through (6) were prepared by replacing 100 %, 50 %, 40 %, 30 %, 20 % or 10 % of the sucrose in the control sample with palatinose of amounts which gave the same sweetness as those of the replaced amounts of sucrose.

All of the samples were stored in a refrigerator immediately before conducting sensory tests and then served as cold drinks for the sensory tests.

### Test 1

A sensory test was conducted with 8 panelists to compare Test Sample (1) with the control sample for tastes. The five-scale evaluation was made on the items of tastes: light taste, sharp end of aftertaste (refreshing taste), goodness of flavor release, flinty taste, goodness of sweet taste, and quaffability.

Table 35 shows the results.

**Table 35**

| | Control Sample | Test Sample (1) |
|---|---|---|
| light taste | 3.0 | 4.1 |
| sharp end of aftertaste | 3.0 | 4.4 |
| goodness of flavor release | 3.0 | 2.8 |
| flinty taste | 3.0 | 4.0 |
| goodness of sweet taste | 3.0 | 3.0 |
| quaffability | 3.0 | 4.0 |

As seen from Table 35, Test Sample (1) was superior to the control sample regarding the light taste, the sharp end of aftertaste, the flinty taste, the goodness of sweet taste, and the quaffability. There was no difference in the goodness of flavor release and the goodness of sweet taste.

According to the results mentioned above, the tea flavored with anherb extract with palatinose was foundto have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for states. It was determined whether the Test Samples gave a refreshing taste or a flinty taste, compared to the control sample. If a half or more of the panelists answered positively, the effects of the invention was recognized.

Table 36 shows the formulations of the sweeteners used in Test Samples (1) through (6) and the control sample, and the results of sensory tests.

**Table 36**

| | substitusion by palatinose(%) | formulations | | | the number of panelists who answered positively /the number of the panelists |
|---|---|---|---|---|---|
| | | palatinose(%) | sucrose(%) | water(%) | |
| Test Sample (1) | 100 | 7.14 | 0 | 92.86 | 6/8 |
| Test Sample (2) | 50 | 3.57 | 1.50 | 94.93 | 6/8 |
| Test Sample (3) | 40 | 2.86 | 1.80 | 95.34 | 5/8 |
| Test Sample (4) | 30 | 2.14 | 2.10 | 95.76 | 5/8 |
| Test Sample (5) | 20 | 1.43 | 2.40 | 96.17 | 5/8 |
| Test Sample (6) | 10 | 0.71 | 2.70 | 96.59 | 3/8 |
| Control Sample | 0 | 0 | 3.00 | 97.00 | - |

As seen from Table 36, the Test Samples were found topresent the refreshing taste and the flinty taste, compared to the control sample with sucrose alone, when 20 % or more of the sucrose was substituted with palatinose (Test Samples (1) through (5)).

### Example 17 (Cinnamon-flavored coffee)

On a coffee flavored with cinnamon (herb flavor), a control sample with sucrose alone and test samples with palatinose were tested for the quality of tastes.

Two grams of instant coffee (Nestle Japan Co., Ltd., trademark: Nescafe Gold Blend ()) were added to 140 g of hot water and dissolved. A cinnamon flavor (Hasegawa Koryo Co., Ltd., product name: Cinnamon Flavor No. 6-11380) was added at 0.05 % to prepare a cinnamon-flavored coffee. Sucrose was added to the cinnamon-flavored coffee to a final concentration of 4.5% to obtain the control sample. Test Samples (1) through (6) were prepared by replacing 100 %, 50 %, 40 %, 30 %, 20 % or 10 % of the sucrose in the control sample with palatinose of amounts which gave the same sweetness as those of the replaced amounts of sucrose.

All of the samples were stored in a refrigerator immediately before conducting sensory tests and then served as cold drinks for the sensory tests.

### Test 1

A sensory test was conducted with 8 panelists to compare Test Sample (1) with the control sample for tastes. The five-scale evaluation was made on the items of tastes: light taste, sharp end of aftertaste (refreshing taste), goodness of flavor release, flinty taste, goodness of sweet taste, and quaffability.

Table 37 shows the results.

**Table 37**

| | Control Sample | Test Sample (1) |
|---|---|---|
| light taste | 3.0 | 3.5 |
| sharp end of aftertaste | 3.0 | 4.0 |
| goodness of flavor release | 3.0 | 3.0 |
| flinty taste | 3.0 | 3.5 |
| goodness of sweet taste | 3.0 | 2.8 |
| quaffability | 3.0 | 3.0 |

As seen from Table 37, Test Sample (1) was superior to the control sample regarding the light taste, the sharp end of aftertaste, and the flinty taste. There was no difference in the goodness of flavor release, the goodness of sweet taste and quaffability.

According to the results mentioned above, the cinnamon-flavored coffee with palatinose was found to have the enhanced refreshing taste and flinty taste, compared to the drink with no palatinose.

### Test 2

Test Samples (1) through (6) were tested for any difference in the effects with the different sweetness contribution ratios. A sensory test was conducted with 8 panelists to compare Test Samples (1) through (6) with the control sample for tastes. It was determined whether the Test Samples gave a refreshing taste or a flinty taste, compared to the control sample. If a half or more of the panelists answered positively, the effects of the invention was recognized.

Table 38 shows the formulations of the sweeteners used in Test Samples (1) through (6) and the control sample, and the results of sensory tests.

**Table 38**

| | substitution by palatinose(%) | formulations | | | the number of panelists who answered positively /the number of the panelists |
|---|---|---|---|---|---|
| | | palatinose(%) | sucrose(%) | water(%) | |
| Test Sample (1) | 100 | 10.71 | 0 | 89.29 | 5/8 |
| Test Sample (2) | 50 | 5.36 | 2.25 | 92.39 | 5/8 |
| Test Sample (3) | 40 | 4.29 | 2.70 | 93.01 | 5/8 |
| Test Sample (4) | 30 | 3.21 | 3.15 | 93.64 | 5/8 |
| Test Sample (5) | 20 | 2.14 | 3.60 | 94.26 | 5/8 |
| Test Sample (6) | 10 | 1.07 | 4.05 | 94.88 | 3/8 |
| Control Sample | 0 | 0 | 4.50 | 95.50 | - |

As seen from Table 38, Test Samples were found to present the refreshing taste and the flinty taste, compared to the control sample, when 20 % or more of the sucrose was substituted with palatinose (Test Samples (1) through (6)).

### Industrial Applicability

The present invention provides a drink containing a flower or herb flavor or a flower or herb extract.

## Claims

1. A drink containing a flower or herb flavor or a flower or herb extract, wherein total sweetness of the drink in a drinking form is equivalent to sweetness of more than 2.0% and at most 4.5% of sucrose and the drink contains palatinose at a sweetness contribution ratio of 30 to 100 % based on the total sweetness.

2. The drink as described in Claim 1, wherein the flower is at least one selected from the group consisting of rose, jasmine, lavender, hibiscus, orange flowers, chamomille, lilac, orchid, mauve, elder flower, St. John's Wort, eyebright, passion flower, heather, pot marigold, and rosemary.

3. The drink as described in Claim 1, wherein the herb is at least one selected from the group consisting of peppermint, spearmint, lemon grass, rosehips, orangepeel, cinnamon, ginger, saffron, echinacea, pomegranate, sage, eyebright, sweet fennel, thyme, mate, eucalyptus, raspberry leaf, rooibos, rosemary, plantain, oregano, cardamon, clove, staranise, linden, andanise seed.

4. The drink described in one of Claims 1 through 3, wherein the drink includes "near-water", isotonic drinks, sport drinks, tea-baseddrinks, soft drinks containing fruit juices, alcoholic drinks, coffee drinks, milk-based drinks, soymilk drinks, and carbonated drinks.

5. The drink described in one of Claims 1 through 3, wherein the drink is a tea-based drink.

6. A drink containing a flower or herb flavor or a flower or herb extract, wherein total sweetness of the drink in a drinking form is equivalent to sweetness of at least 0.3 % and at most 2.0 % of sucrose and the drink contains palatinose at a sweetness contribution ratio of 20 to 100% based on the total sweetness.

7. The drink as described in Claim 6, wherein the flower is at least one selected from the group consisting of rose, jasmine, lavender, hibiscus, orange flowers, chamomile, lilac, orchid, mauve, elder flower, St. John's Wort, eyebright, passion flower, heather, pot marigold, and rosemary.

8. The drink as described in Claim 1, wherein the herb is at least one selected from the group consisting of peppermint, spearmint, lemon grass, rose hips, orange peel, cinnamon, ginger, saffron, echinacea, pomegranate, sage, eyebright, sweet fennel, thyme, mate, eucalyptus, raspberry leaf, rooibos, rosemary, plantain, oregano, cardamon, clove, staranise, linden, andanise seed.

9. The drink described in one of Claims 6 through 8, wherein the drink includes "near-water", isotonic drinks, sport drinks, tea-based drinks, soft drinks containing fruit juices, alcoholic drinks, coffee drinks, milk-based drinks, soymilk drinks, and carbonated drinks.

10. The drink described in one of Claims 6 through 8, wherein the drink is a tea-based drink.
